# FASCICULE DE BREVET EUROPEEN

(11) **EP 3 387 395 B1**
(45) Date de publication et mention de la délivrance du brevet: **30.09.2020**
(21) Numéro de dépôt: 16819972.7
(22) Date de dépôt: 02.12.2016
(51) Int. Cl.: G01G 19/44

(54) **APPAREIL DE PESAGE ÉLECTRONIQUE EQUIPÉ D'UN SUR-PLATEAU**
ELEKTRONISCHE WAAGE MIT EINER DECKPLATTE
ELECTRONIC WEIGHING SCALE WITH A COVER PLATE

(30) Priorité: 07.12.2015 FR 1561951
(43) Date de publication de la demande: 17.10.2018
(73) Titulaire: SEB S.A., 69130 Ecully (FR)
(72) Inventeur: SARRAZIN, Michel, 74150 Massingy (FR); VIGUIER, Jérôme, 73410 La Biolle (FR)
(74) Mandataire: SEB Developpement Brevets
(86) Numéro de dépôt international: PCT/FR2016/053194
(87) Numéro de publication internationale: WO 2017/098119

(56) Documents cités:
- WO-A1-2008/049261
- WO-A2-2004/055624

## Description

### Domaine technique

La présente invention se rapporte au domaine des appareils de pesage électroniques qui comprennent un plateau de réception d'une charge et un système de traitement électronique permettant d'activer des fonctions en appuyant sur le plateau de réception de la charge. Ces appareils de pesage consistent notamment en des pèse-personnes pouvant inclure les pèse-personnes à impédancemètre et les pèse-bébés, et en des balances ménagères.

### Etat de la technique

Il est connu des appareils de pesage électroniques à clavier intégré au plateau de réception de la charge. On citera notamment le brevet EP0852329B1 qui décrit un appareil de pesage comprenant un plateau de réception d'une charge, une structure de pesée intégrant un ou plusieurs capteurs de poids qui supportent le plateau de réception et un système de traitement électronique configuré pour afficher la masse de la charge ou pour activer des fonctions sur l'appareil de pesage, lesdites fonctions étant associées à des positions d'appui sur le plateau de réception. Ces positions d'appui sont matérialisées sur le plateau de réception par des marquages constituant des touches de commande.

Le document WO 2004/055624 A2 décrit un appareil de pesage avec un sur-plateau.

Il est également connu des appareils de pesage avec des plateaux de réception présentant des décors très variés afin que le propriétaire puisse disposer d'un appareil de pesage personnalisé.

### Résumé de l'invention

L'invention a pour objet de mettre en œuvre des appareils de pesage électroniques qui puissent être personnalisés et adaptés au mieux à chaque propriétaire ou utilisateur selon la revendication 1.

A cet effet, l'invention concerne un appareil de pesage électronique qui comprend une structure de pesée munie d'au moins un capteur de poids, et un plateau de réception configuré pour réceptionner une charge, ledit plateau de réception étant supporté par ledit au moins un capteur de poids.

L'appareil de pesage comprend également un système de traitement électronique connecté à l'au moins un capteur de poids grâce à des premiers moyens de connexion. Le système de traitement électronique est configuré pour activer des fonctions associées à des positions d'appui respectives sur le plateau de réception, c'est-à-dire à des coordonnées du centre de gravité d'une charge positionnée sur le plateau de réception, cette charge étant dans ce cas un doigt d'un utilisateur qui appuie sur le plateau de réception pour activer l'une des fonctions. Ce système de traitement électronique est également configuré pour calculer la masse d'une charge disposée sur le plateau de réception.

L'appareil de pesage comprend également un afficheur électronique, par exemple un afficheur à cristaux liquides, connecté au système de traitement électronique grâce à des seconds moyens de connexion, lequel est configuré pour afficher notamment la masse de la charge pesée et les fonctions activées.

En outre, de manière remarquable, l'appareil de pesage comprend un sur-plateau configuré pour être rapporté sur le plateau de réception, sur lequel sont matérialisées des touches de commande en correspondance avec les différentes positions d'appui définies sur ledit plateau de réception et permettant l'activation desdites fonctions. Le choix de l'activation des fonctions par le système de traitement électronique sur la base du calcul des coordonnées du centre de gravité de la charge (la position d'appui du doigt), autorise l'ajout d'une surépaisseur sur le plateau de réception sans altérer le calcul desdites coordonnées. Ainsi, il est possible de rapporter le sur-plateau sur le plateau de réception, sans aucune incidence sur le bon fonctionnement du système de traitement électronique lorsque l'on pose une charge sur le plateau de réception. Cette conception permet avantageusement de rapporter des sur-plateaux qui présentent des états de surface ou des reliefs différents, par exemple une surface ondulée, striée, lisse, ou bosselée, et des décors différents, par exemple des variantes de couleurs et/ou de motifs. Ces sur-plateaux peuvent également être mis en œuvre dans des matières différentes, par exemple une matière siliconée, une matière thermoplastique ou une matière textile thermoformée. L'utilisateur peut ainsi adapter son appareil de pesage électronique selon ses goûts et ses besoins.

De préférence, le système de traitement électronique est configuré pour que la sélection du mode calcul de la masse ou du mode activation des fonctions dépende de l'intensité de la charge appuyant sur le plateau de réception et de la position d'appui de la charge sur le plateau de réception. Lorsqu'une charge à peser est positionnée sur le plateau de réception, l'au moins un capteur de poids est soumis à des contraintes de déformation qui sont transmises au système de traitement électronique, lequel calcule les coordonnées du centre de gravité de la charge et une intensité proportionnelle auxdites contraintes. Du fait que cette intensité a une valeur supérieure à une intensité de référence, celle-ci est traduite par le système de traitement électronique en une valeur de la masse de la charge. Cette valeur de la masse est alors affichée par l'afficheur électronique. Au contraire, lorsque l'utilisateur souhaite activer une fonction, celui-ci appuie avec un doigt sur une position définie sur le plateau de réception. L'au moins un capteur de poids est alors soumis à des contraintes, ce qui permet également au système de traitement électronique de calculer une intensité proportionnelle à ces contraintes et les coordonnées du centre de gravité de la charge sur le plateau de réception, c'est-à-dire la position d'appui avec le doigt sur le sur-plateau et, indirectement, sur le plateau de réception. Du fait de la faible valeur de l'intensité, inférieure à une intensité de référence, et de la position d'appui correspondant à une position définie sur le plateau de réception, le système de traitement électronique active une fonction correspondant à ladite position d'appui définie.

Selon une première réalisation de l'appareil de pesage électronique objet de l'invention, les positions d'appui sont matérialisées par des marquages sur le plateau de réception, ces marquages étant associés aux différentes fonctions. En outre, les touches de commande sont prédéfinies sur le sur-plateau dans des positions correspondant aux marquages. Cette conception permet de simplifier l'utilisation de l'appareil de pesage électronique, l'utilisateur ayant simplement à rapporter le sur-plateau sur le plateau de réception et à utiliser les différentes fonctions dudit appareil en appuyant sur les touches de commande sur le sur-plateau.

Selon une seconde réalisation de l'appareil de pesage électronique objet de l'invention, le système de traitement électronique est configuré pour enregistrer des positions d'appui et les associer aux différentes fonctions, lesdites positions d'appui étant définies en fonction de la matérialisation des touches de commande sur le sur-plateau. Cette variante de réalisation peut être mise en œuvre en adaptant la programmation du système de traitement électronique. Cette conception permet avantageusement de laisser toute liberté à l'utilisateur quant à l'implantation et la matérialisation des touches de commande sur le sur-plateau, de sorte à le rendre plus ergonomique. L'utilisateur peut, par exemple, peindre les touches de commande ou rapporter des pastilles autocollantes aux emplacements qu'il désire sur le sur-plateau, puis effectuer la programmation des positions des touches de commande par le biais du système de traitement électronique.

On peut également combiner les deux modes de réalisation précités, c'est-à-dire matérialiser des marquages sur le plateau de réception qui sont associés aux différentes fonctions, tout en prévoyant un système de traitement électronique qui permet de modifier les positions d'appui sur le plateau de réception et de les associer auxdites fonctions, malgré la présence des marquages, de sorte à permettre à l'utilisateur de rapporter un sur-plateau avec des touches de commande déjà matérialisées et correspondant avec les marquages, ou de rapporter un sur-plateau sur lequel les touches de commande sont matérialisées au libre choix de l'utilisateur, sans tenir compte des marquages sur le plateau de réception.

Selon l'invention, le plateau de réception comprend un afficheur électronique tel que précité, notamment sous la forme d'un écran de lecture, et le sur-plateau comprend une fenêtre transparente configurée pour se superposer à l'afficheur électronique lors de sa mise en place sur ledit plateau de réception. Cela permet de rapporter un sur-plateau de dimensions identiques au plateau de réception, de sorte à le recouvrir entièrement. On peut cependant envisager des variantes de mise en œuvre pour lesquelles l'afficheur électronique est déporté du plateau de réception de la charge, dans ce cas le sur-plateau ne dispose d'aucune fenêtre transparente.

Dans une réalisation préférentielle de l'appareil de pesage, le sur-plateau est amovible, ce qui permet de le retirer facilement, par exemple pour nettoyer sa surface avec de l'eau ou tout autre produit, sans incidence sur les composants électroniques de l'appareil de pesage. Dans une variante de réalisation, on pourrait prévoir un sur-plateau rapporté et fixé sur le plateau de réception, par exemple au moyen de pastilles autocollantes à double face ou de vis de fixation.

Dans une réalisation de l'appareil de pesage, la structure de pesée comprend quatre capteurs de poids agencés pour être positionnés sous les quatre coins du plateau de réception. D'autres variantes sont cependant envisageables, notamment un seul capteur de poids constitué d'une barrette métallique sur laquelle sont agencées des jauges extensométriques permettant de mesurer dans deux directions les moments de la force appliquée au capteur.

Le nombre de fonctions sur l'appareil de pesage est très variable selon qu'il s'agisse d'un pèse personne, d'un pèse-personne à impédancemètre, d'un pèse-bébé ou d'une balance ménagère. De préférence, l'appareil de pesage selon l'invention comprend entre deux et huit fonctions auxquelles sont associées respectivement entre deux et huit positions d'appui sur le plateau de réception, le sur-plateau comprenant respectivement entre deux et quarante touches de commande.

### Brève description des figures

Les caractéristiques et avantages de l'invention apparaîtront à la lecture de la description suivante de variantes de réalisation de l'appareil de pesage électronique, laquelle s'appuie sur des figures parmi lesquelles :
- la figure 1 illustre une vue éclatée d'un premier mode de réalisation d'un appareil de pesage électronique selon l'invention ;
- la figure 2 illustre une variante de sur-plateau qui peut être rapporté sur le plateau de réception de l'appareil de pesage électronique de la figure 1 ;
- les figures 3 et 4 illustrent une variante d'appareil de pesage électronique avec un sur-plateau amovible rapporté sur le plateau de réception ;
- les figures 5 et 6 illustrent deux variantes de mise en œuvre de capteurs de poids sur l'appareil de pesage électronique ;
- les figures 7 et 8 illustrent deux variantes d'un appareil de pesage électronique selon l'invention, l'une consistant en un pèse-personne et l'autre en une balance ménagère ;
- la figure 9 illustre un schéma de principe du fonctionnement de l'appareil de pesage électronique, dans un mode de réalisation préféré.

### Description détaillée

Dans la suite de la description, les mêmes références sont utilisées pour décrire les caractéristiques similaires selon les différentes variantes de réalisation. En outre, le terme « appareil » désignera l'appareil de pesage électronique selon l'invention, sauf indication contraire.

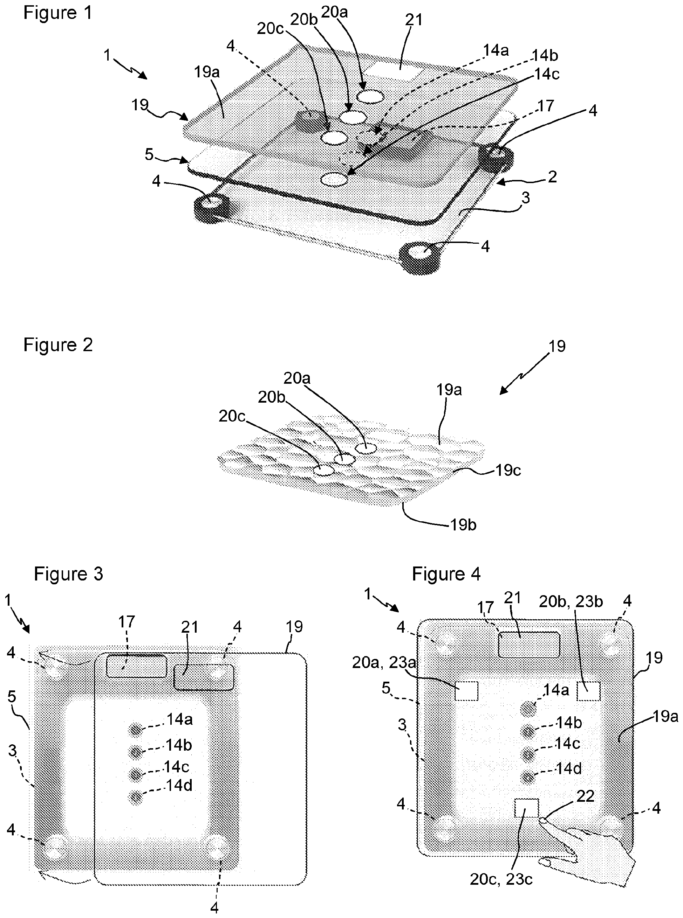

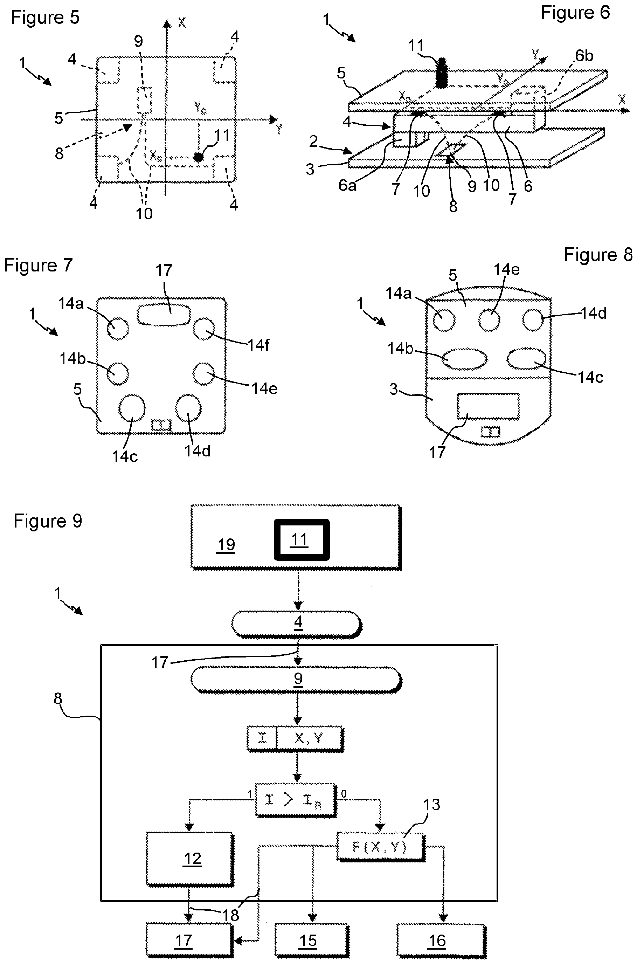

Tel qu'illustré sur la figure 1, l'appareil 1 comprend une structure de pesée 2 qui est munie d'un socle 3 ou base de pesée et de capteurs de poids 4, ledit appareil comprenant également un plateau de réception 5 d'une charge. Le nombre de capteurs de poids 4 est variable, selon la configuration de l'appareil 1. A titre d'exemple, sur les figures 1 et 3 à 5, la structure de pesée 2 comprend quatre capteurs de poids 4 qui sont agencés aux quatre coins du socle 3 et qui supportent respectivement les quatre coins du plateau de réception 5. Sur la figure 6, la structure de pesée 2 comprend un seul capteur de poids 4 se présentant sous la forme d'un barreau 6 métallique s'étendant transversalement en partie centrale du socle 3. Le barreau 6 est muni de jauges extensométriques 7 qui mesurent les déformations du barreau 6. Une première extrémité 6a du barreau 6 est soutenue par le socle 3 et une seconde extrémité 6b dudit barreau 6 supporte le plateau de réception 5.

Tel qu'illustré sur les figures 5, 6 et 9, l'appareil 1 comprend un système de traitement électronique 8 qui comporte un circuit électronique 9 raccordé aux capteurs de poids 4 grâce à des premiers moyens de connexion 10 de type fil électrique. Ce circuit électronique 9 récupère les données (sous la forme de signaux électriques) représentatives des déformations subies par les capteurs de poids 4 dues à la présence d'une charge 11 sur le plateau de réception 5. Puis ce circuit électronique 9 restitue des données (également sous la forme de signaux électriques) représentatives de l'intensité I de la charge et des coordonnées X, Y du centre de gravité de la charge 11 sur le plateau de réception 5. Lorsque cette charge 11 est un doigt qui appuie sur le plateau de réception 5, le centre de gravité correspond à la position d'appui. Le système de traitement électronique 8 compare ensuite cette intensité I à une intensité de référence I_{R}. Lorsque l'intensité I est supérieure à l'intensité de référence I_{R} (I>I_{R}), le système de traitement électronique 8 transmet l'information à un premier module de calcul 12 qui détermine la masse de la charge 11 en fonction de l'intensité I. Lorsque l'intensité I est inférieure à l'intensité de référence I_{R} (I<I_{R}), le système de traitement électronique 8 transmet l'information à un second module de calcul 13 qui active une fonction associée à la position d'appui de la charge 11 sur le plateau de réception 5. Sur la figure 7, l'appareil 1 comprend six fonctions associées à six positions d'appui d'une charge 11 matérialisées par des marquages 14a, 14b, 14c, 14d, 14e, 14f sur le plateau de réception 5. Sur la figure 8, l'appareil comprend cinq fonctions associées à cinq positions d'appui d'une charge 11 matérialisées par des marquages 14a, 14b, 14c, 14d, 14e sur le plateau de réception 5. Le nombre de fonctions associé au même nombre de positions d'appui de la charge 11 pourra par exemple varier entre deux et quarante. Ces fonctions sont, par exemple, le changement d'unité de mesure de la charge du gramme à la livre, le choix de l'utilisateur se pesant, l'enregistrement de la valeur de la masse mesurée dans une mémoire 15, l'activation d'une minuterie 16 ...

L'appareil comprend également un afficheur électronique 17, illustré en figures 1, 3, 4, 7 et 8, par exemple un afficheur à cristaux liquides, qui est connecté aux premier et second modules de calcul 12, 13 du système de traitement électronique 8 grâce à des seconds moyens de connexion 18 de type fil électrique. Cet afficheur électronique permet l'affichage de la masse de la charge et de certaines fonctions activées, comme par exemple le choix de l'utilisateur, l'unité de mesure, le décompte d'une minuterie. Sur la figure 7, l'afficheur électronique 17 est agencé directement sur le plateau de réception 5. Au contraire, sur la figure 8, cet afficheur électronique 17 est déporté sur le socle 3, hors du plateau de réception 5.

Tel qu'illustré en figures 1 à 4, l'appareil 1 comprend également un sur-plateau 19 configuré pour être rapporté sur le plateau de réception 5 sans altérer le centre de gravité. Pour cela, le sur-plateau 19 est de dimensions identiques au plateau de réception 5 et il dispose d'une répartition de masse homogène sur toute sa surface. Le sur-plateau 19 peut être simplement posé sur le plateau de réception 5, de sorte à pouvoir le retirer facilement. On peut cependant prévoir des moyens de fixation entre le sur-plateau 19 et le plateau de réception 5, par exemple un film adhésif sur la face inférieure 19b du sur-plateau 19. On peut également prévoir un rebord périphérique sur le contour 19c du sur-plateau 19 de sorte à le caler convenablement par encastrement lors de son positionnement sur le plateau de réception 5. Tel qu'illustré en figures 1 à 4, le sur-plateau 19 comprend une fenêtre 21 transparente qui se superpose à l'afficheur électronique 17 lorsque ledit sur-plateau 19 est positionné sur le plateau de réception 5.

Sur la figure 1, le sur-plateau 19 comprend des touches de commande 20a, 20b, 20c qui sont matérialisées sur sa face externe 19a. Lorsque le sur-plateau 19 est positionné sur le plateau de réception 5, les touches de commande 20a, 20b, 20c correspondent avec les positions des marquages 14a, 14b, 14c matérialisés sur le plateau de réception 5.

Comme expliqué précédemment, le circuit électronique 9 calcule les coordonnées X, Y de la projection du centre de gravité de la charge 11 sur le plateau de réception 5, ce qui permet avantageusement l'ajout du sur-plateau 19 sans incidence sur le calcul desdites coordonnées X, Y puisque le centre de gravité de la charge 11 n'est pas modifié, la seule différence étant que la charge 11 est appliquée sur ledit sur-plateau 19 plutôt que sur le plateau de réception 5. La figure 2 illustre une variante de sur-plateau 19 à celle illustrée en figure 1, la seule différence étant l'état de surface de la face externe 19a qui est bosselée plutôt que lisse. Bien entendu, d'autres variantes sont envisageables sans sortir du cadre de l'invention, par exemple une face externe 19a striée ou ondulée. On peut envisager également différentes matières et différents motifs pour la conception du sur-plateau 19. De préférence, le sur-plateau 19 est opaque pour dissimuler complètement le plateau de réception 5.

Les figures 3 et 4 illustrent une autre variante selon laquelle le sur-plateau 19 ne dispose initialement d'aucune touche de commande, celles-ci étant matérialisées ultérieurement par l'utilisateur selon sa convenance, une fois ledit sur-plateau 19 en position sur le plateau de réception 5. Pour cela, le second module de calcul 13 du système de traitement électronique 8 intègre un programme de routine permettant de mémoriser les coordonnées X, Y liées au sur-plateau 19 - en position sur le plateau de réception 5 - qui sont attribuées à chaque fonction existant sur l'appareil 1, de sorte à activer ces fonctions par un appui avec le doigt sur ces coordonnées, une fois la séquence de mémorisation effectuée. Par exemple, lorsque l'utilisateur maintient en appui un doigt 22 sur le sur-plateau 19 pendant une durée de 5 secondes, ou par une séquence prédéterminée d'appuis, le second module de calcul 13 peut lancer la séquence de mémorisation des fonctions, la première fonction apparaissant sur l'afficheur électronique 17, lesdites coordonnées X, Y de la première fonction étant validées par le second module de calcul 13 en maintenant le doigt 22 en appui sur lesdites coordonnées X, Y pendant quelques secondes, et ainsi de suite pour les coordonnées X, Y des fonctions suivantes également matérialisées au moyen de stickers 23a, 23b, 23c. Les touches de commande 20a, 20b, 20c peuvent être matérialisées préalablement à la séquence d'initialisation des fonctions, par exemple au moyen des stickers 23a, 23b, 23c collés sur la face externe 19a du sur-plateau 19 ou de tout autre marquage avec un crayon ou de la peinture, illustrant des chiffres, des lettres ou des dessins.

Sur cette variante des figures 3 et 4, des marquages 14a, 14b, 14c, 14d sont matérialisés sur le plateau de réception 5 et permettent l'activation de fonctions qui leur sont associées. Cela permet de positionner des sur-plateaux 19 avec des touches de commande 20a, 20b, 20c pré-matérialisées ou, au contraire, des sur-plateaux 19 sur lesquels les touches de commande 20a, 20b, 20c sont positionnées à la convenance de l'utilisateur au moyen des stickers 23a, 23b, 23c ou de tout autre moyen. On peut cependant envisager une variante d'appareil 1 sur lequel aucun marquage 14a, 14b, 14c, 14d n'est matérialisé sur le plateau de réception 5, l'utilisateur devant dans ce cas automatiquement lancer une séquence d'initialisation pour mémoriser les coordonnées X, Y des fonctions selon les positions des touches de commande 20a, 20b, 20c qu'il souhaite définir, lors de la première utilisation de l'appareil 1. Cette possibilité de choisir les positions des touches de commande 20a, 20b, 20c permet d'adapter au mieux l'appareil 1 aux conditions d'utilisation et/ou à l'ergonomie du lieu d'implantation de l'appareil 1. La programmation du second module de calcul 13 peut également être configurée pour permettre la mémorisation de certaines fonctions uniquement parmi toutes celles possibles, ce qui permet d'adapter au mieux l'appareil 1 à ses besoins.

## Revendications

1. Appareil (1) de pesage électronique comprenant notamment :
- un plateau de réception (5) configuré pour réceptionner une charge,
- un système de traitement électronique (8) configuré pour activer des fonctions associées à des positions d'appui (14a, 14b, 14c, 14d, 14e, 14f) respectives sur le plateau de réception, lesdites positions d'appui (14a, 14b, 14c, 14d, 14e, 14f) correspondant à des coordonnées du centre de gravité de la charge positionnée sur le plateau de réception (5),
**caractérisé en ce qu'**il comprend un sur-plateau (19) configuré pour être rapporté sur le plateau de réception, sur lequel sont matérialisées des touches de commande (20a, 20b, 20c) en correspondance avec lesdites positions d'appui sur ledit plateau de réception.

2. Appareil (1) de pesage selon la revendication 1, dans lequel les positions d'appui sont matérialisées par des marquages (14a, 14b, 14c, 14d, 14e, 14f) sur le plateau de réception (5) associés aux différentes fonctions, les touches de commande (20a, 20b, 20c) étant prédéfinies sur le sur-plateau (19) dans des positions correspondant aux marquages.

3. Appareil (1) de pesage selon la revendication 1, dans lequel le système de traitement électronique (8) est configuré pour enregistrer des positions d'appui et les associer aux fonctions, lesdites positions d'appui étant définies en fonction de la matérialisation des touches de commande (20a, 20b, 20c) sur le sur-plateau (19).

4. Appareil (1) de pesage selon l'une des revendications précédentes, dans lequel le plateau de réception (5) comprend un afficheur électronique (17), et le sur-plateau (19) comprend une fenêtre (21) transparente configurée pour se superposer à l'afficheur électronique lors de sa mise en place sur ledit plateau de réception.

5. Appareil (1) de pesage selon l'une des revendications précédentes, dans lequel le sur-plateau (19) est amovible.

6. Appareil (1) de pesage selon l'une des revendications précédentes, lequel comprend une structure de pesée (2) comportant au moins un capteur de poids (4) configuré pour supporter le plateau de réception (5).

7. Appareil (1) de pesage selon la revendication 6, lequel comprend quatre capteurs de poids (4) agencés pour être positionnés sous les quatre coins du plateau de réception (5).

8. Appareil (1) de pesage selon l'une des revendications précédentes, lequel comprend entre deux et huit fonctions auxquelles sont associées respectivement entre deux et huit positions d'appui sur le plateau de réception (5), le sur-plateau (19) comprenant respectivement entre deux et quarante touches de commande (20a, 20b, 20c).

9. Appareil (1) de pesage selon l'une des revendications 1 à 8, lequel est un pèse-personne.

10. Appareil (1) de pesage selon l'une des revendications 1 à 8, lequel est une balance ménagère.

## Patentansprüche

1. Elektronisches Wiegegerät (1), insbesondere umfassend:
- eine Aufnahmeplatte (5), die zum Aufnehmen einer Last konfiguriert ist,
- ein elektronisches Verarbeitungssystem (8), das zum Aktivieren von Funktionen konfiguriert ist, die entsprechenden Anschlagpositionen (14a, 14b, 14c, 14d, 14e, 14f) auf der Aufnahmeplatte zugeordnet sind, wobei die Anschlagpositionen (14a, 14b, 14c, 14d, 14e, 14f) Koordinaten des Schwerpunkts der Last entsprechen, die auf der Aufnahmeplatte (5) positioniert ist,
**dadurch gekennzeichnet, dass** es eine Oberplatte (19) umfasst, die konfiguriert ist, um auf der Aufnahmeplatte angebracht zu werden, auf der Steuertasten (20a, 20b, 20c) entsprechend den Auflagepositionen auf der Aufnahmeplatte realisiert sind.

2. Wiegegerät (1) nach Anspruch 1, wobei die Anschlagpositionen durch Markierungen (14a, 14b, 14c, 14d, 14e, 14f) auf der Aufnahmeplatte (5) realisiert sind, die den verschiedenen Funktionen zugeordnet sind, wobei die Steuertasten (20a, 20b, 20c) auf der Oberplatte (19) in Positionen vordefiniert sind, die den Markierungen entsprechen.

3. Wiegegerät (1) nach Anspruch 1, wobei das elektronische Verarbeitungssystem (8) konfiguriert ist, um Anschlagpositionen aufzuzeichnen und sie den Funktionen zuzuordnen, wobei die Anschlagpositionen als Funktion der Realisierung der Steuertasten (20a, 20b, 20c) auf der Oberplatte (19) definiert sind.

4. Wiegegerät (1) nach einem der vorhergehenden Ansprüche, wobei die Aufnahmeplatte (5) eine elektronische Anzeige (17) umfasst, und wobei die Oberplatte (19) ein transparentes Fenster (21) umfasst, das konfiguriert ist, um mit der elektronischen Anzeige während ihrer Platzierung auf der Aufnahmeplatte zu überlappen.

5. Wiegegerät (1) nach einem der vorhergehenden Ansprüche, wobei die Oberplatte (19) entfernbar ist.

6. Wiegegerät (1) nach einem der vorhergehenden Ansprüche, das eine Wiegestruktur (2) umfasst, die mindestens einen Gewichtssensor (4) aufweist, der konfiguriert ist, um die Aufnahmeplatte (5) zu tragen.

7. Wiegegerät (1) nach Anspruch 6, das vier Gewichtssensoren (4) umfasst, die so angeordnet sind, dass sie unter den vier Ecken der Aufnahmeplatte (5) positioniert sind.

8. Wiegegerät (1) nach einem der vorhergehenden Ansprüche, das zwischen zwei und acht Funktionen umfasst, denen dementsprechend zwischen zwei und acht Anschlagpositionen auf der Aufnahmeplatte (5) zugeordnet sind, wobei die Oberplatte (19) dementsprechend zwischen zwei und vierzig Steuertasten (20a, 20b, 20c) umfasst.

9. Wiegegerät (1) nach einem der Ansprüche 1 bis 8, das eine Personenwaage ist.

10. Wiegegerät (1) nach einem der Ansprüche 1 bis 8, das eine Haushaltswaage ist.

## Claims

1. Electronic weighing apparatus (1) comprising in particular:
- a reception plate (5) configured to receive a load,
- an electronic processing system (8) configured to activate functions associated with respective resting positions (14a, 14b, 14c, 14d, 14e, 14f) on the reception plate, said resting positions (14a, 14b, 14c, 14d, 14e, 14f) corresponding to coordinates of the centre of gravity of the load positioned on the reception plate (5),
**characterised in that** it comprises an overplate (19) configured to be attached to the reception plate, whereon control buttons (20a, 20b, 20c) are provided, matching said resting positions on said reception plate.

2. Weighing apparatus (1) according to claim 1, wherein the resting positions are represented by markings (14a, 14b, 14c, 14d, 14e, 14f) on the reception plate (5) associated with the various functions, the control buttons (20a, 20b, 20c) being predefined on the overplate (19) in positions corresponding to the markings.

3. Weighing apparatus (1) according to claim 1, wherein the electronic processing system (8) is configured to record resting positions and to associate them with the functions, said resting positions being defined according to the provision of the control buttons (20a, 20b, 20c) on the overplate (19).

4. Weighing apparatus (1) according to one of the preceding claims, wherein the reception plate (5) comprises an electronic display (17), and the overplate (19) comprises a transparent window (21) configured to be superimposed on the electronic display when it is placed on said reception plate.

5. Weighing apparatus (1) according to one of the preceding claims, wherein the overplate (19) is removable.

6. Weighing apparatus (1) according to one of the preceding claims, which comprises a weighing structure (2) including at least one weight sensor (4) configured so as to support the reception plate (5).

7. Weighing apparatus (1) according to claim 6, which comprises four weight sensors (4) arranged so as to be positioned under the four corners of the reception plate (5).

8. Weighing apparatus (1) according to one of the preceding claims, which comprises between two and eight functions with which respectively between two and eight resting positions on the reception plate (5) are associated, the overplate (19) comprising respectively between two and forty control buttons (20a, 20b, 20c).

9. Weighing apparatus (1) according to one of claims 1 to 8, which is a bathroom scale.

10. Weighing apparatus (1) according to one of claims 1 to 8, which is a kitchen scale.
